# EUROPEAN PATENT APPLICATION

(11) **EP 4 321 439 A1**
(43) Date of publication of application: **14.02.2024**
(21) Application number: 22461596.3
(22) Date of filing: 12.08.2022
(51) Int. Cl.: B64D 41/00, B64D 9/00

(54) **ELECTRICAL POWER FOR AIRCRAFT**

(71) Applicant: Goodrich Corporation, Charlotte, NC 28217 (US)
(72) Inventor: Kwa niewski, Pawe, 51-317 Wroclaw (PL)
(74) Representative: Dehns

(57) **Abstract**

A portable container (100, 200) for being loaded into and unloaded from a compartment of an aircraft (1000, 800, 850), the portable container (100, 200) comprises a power source (300) comprising one or more rechargeable batteries (302) and coupling circuitry configured to electrically couple one or more of the rechargeable batteries (302) to an electrical connector (310, 410), and a housing (102) comprising the power source (300), wherein the power source (300) is operable to discharge one or more of the rechargeable batteries (302) and transmit a discharge current via the electrical connector (310, 410), and wherein the electrical connector (310, 410) comprises an interface portion (312, 412) operable to be physically connectable with a corresponding interface portion (312, 412) of another electrical connector (310, 410) to electrically couple the electrical connector (310, 410) to the another electrical connector (310, 410).

## Description

### Technical Field

The present disclosure relates to apparatus and methods for providing electrical power for aircraft. In particular, this disclosure relates to providing electrical power for powering aircraft electrical systems.

### Background

It is known that modern airplanes carry one or more generators and/or alternators for generating electrical power for powering various on-board electrical devices. These traditional generators are engine driven, and thus require the burning of fuel, such that increases in electrical power consumption correlate with increased fuel consumption. Hence, for aircraft comprising a number of electrical components the power consumed by the on-board electronics systems can significantly impact fuel consumption.

It is also known that some modern aircraft may carry an auxiliary power unit (APU), which is a gas turbine typically located near a rear portion of the fuselage and used for powering the electrical systems of the aircraft whilst on the ground. In some cases, the APU may be used for generating electrical power in the event of loss of an engine generator.

It is also known that some modern aircraft may carry a Ram Air Turbine (RAT) connected to a generator so as to generate electrical power on the basis of ram pressure resulting from the speed of the aircraft. Modern aircraft may typically carry a RAT for emergency use only in the case of failure of both the engine driven generator and the APU.

Hence, modern aircraft typically carry one or more engine driven generators as well as an APU and a RAT each contributing to the weight of the aircraft, in which during flight an engine driven generator is responsible for generating electrical power for powering the electrical devices. Therefore, generation of electrical power during flight requires burning of fuel and for modern aircraft comprising a range of electrical devices the need to power these devices impacts fuel consumption. Moreover, developments of modern aircraft have led to increases in the number of on-board electrical components and the complexity of the on-board electrical components thus resulting in increased power consumption and a need for improved provision of electrical power for aircraft.

It is in this context that the present disclosure arises.

### Summary

According to a first aspect of the present disclosure there is provided a portable container for being loaded into and unloaded from a compartment of an aircraft, the portable container comprising:
a power source comprising one or more rechargeable batteries and coupling circuitry configured to electrically couple one or more of the rechargeable batteries to an electrical connector; and
a housing comprising the power source, wherein the power source is operable to discharge one or more of the rechargeable batteries and transmit a discharge current via the electrical connector, and
wherein the electrical connector comprises an interface portion operable to be physically connectable with a corresponding interface portion of another electrical connector to electrically couple the electrical connector to the another electrical connector.

Thus examples of the present disclosure provide a portable container comprising a power source including one or more rechargeable batteries. The one or more rechargeable batteries can thus be charged (e.g. using a mains power supply) and the portable container comprising one or more at least partially charged rechargeable batteries can be loaded into a compartment of an aircraft and connected using the electrical connector of the portable container and another electrical connector inside the compartment of the fuselage. Therefore, after being loaded into the compartment of the fuselage, the portable container is operable to output, via the electrical connector, electrical power resulting from discharging of one or more of the rechargeable batteries. In this way, the portable container can provide electrical power for powering one or more electronic devices on-board the aircraft. In particular, the portable container can be charged, potentially using electricity generated from renewable energy resources (e.g. wind and/or solar energy sources), and used during a flight to provide electrical power for powering one or more on-board electrical devices. After landing, the portable container can either be unloaded from the compartment for subsequent recharging or recharged in situ (without being removed from the aircraft) and used for providing electrical power during a subsequent flight.

In some examples of the disclosure, the portable container may be a cargo container for storing cargo, and wherein the housing comprises a first compartment for storing the cargo and a second compartment for storing one or more of the rechargeable batteries. Therefore, some examples of the present disclosure provide a dual purpose portable container comprising a power source including one or more rechargeable batteries and at least one compartment for storing cargo. In particular, such a portable container (portable air cargo container) is capable of being loaded into and unloaded from aircraft by airport staff with a quick turnaround between flights. Generally, the staff and equipment associated with such loading and unloading is already in-place. Therefore, the portable air cargo container of the present disclosure can be conveniently loaded to and unloaded from an aircraft. One or more power sources housed in the portable air cargo container can be used for powering one or more electronic devices of the aircraft whilst on the aircraft, and the portable air cargo container can be unloaded as part of conventional cargo unloading and one or more of the rechargeable batteries recharged prior to use on a next flight.

In some examples of the disclosure, the power source may be operable to receive a current via the electrical connector and one or more of the rechargeable batteries are operable to store energy according to the received current. Therefore, one or more of the rechargeable batteries can be recharged whilst housed in the portable container.

In some examples of the disclosure, one or more of the rechargeable batteries are integrally formed with the portable container.

In some examples of the disclosure, one or more of the rechargeable batteries are releasably attached to an internal portion of the housing. This enables one or more of the rechargeable batteries to be removed from the container. In this way, a battery having a lower level of charge can be replaced with a battery with a higher level of charge to allow use of the container with a short turn-around time between flights. Alternatively or in addition, degradation of battery performance over time may lead to unsatisfactory performance and one or more poorly functioning rechargeable batteries can be removed and replaced without having to replace the entire portable container.

In some examples of the disclosure, the portable container may comprise a plurality of electrical connectors, each electrical connector being electrically coupled to one or more of the rechargeable batteries via the coupling circuitry. Therefore, a plurality of electrical connectors can provide a plurality of possible locations for connecting to the portable container which may be particularly useful when some portions of the container are obstructed due to adjacent objects such as other containers or walls of an aircraft compartment.

In some examples of the disclosure, at least one electrical connector is arranged on an external surface of the portable container.

In some examples of the disclosure, at least one electrical connector is arranged on a recessed portion of the external surface of the portable container.

In some examples of the disclosure, the portable container comprises a movable protective cover movable between a first position and a second position, wherein in the first position the movable protective cover is configured to cover the electrical connector and in the second position the electrical connector is not covered by the movable protective cover.

The portable container may comprise one or more walls defining the housing. In some examples of the disclosure, a first electrical connector is arranged on a first wall defining the housing and a second electrical connector is arranged on a second wall defining the housing.

In some examples of the disclosure, the housing has a substantially cuboidal exterior shape.

According to a second aspect of the present disclosure there is provided an aircraft comprising:
a fuselage defining a longitudinal axis between a forward end and an aft end, the fuselage comprising one or more compartments; and
an electrical system comprising one or more electronic devices and coupling circuitry to electrically couple one or more of the electronic devices to an electrical connector,
wherein at least one compartment of the fuselage comprises at least one portable container according to any of the configurations disclosed above, wherein the electrical connector of the portable container is physically connected to the electrical connector of the electrical system, and wherein the portable container is configured to discharge one or more of the rechargeable batteries and transmit a discharge current to the electrical system of the aircraft via the physically connected electrical connectors.

Thus examples of the present disclosure provide an aircraft for which one or more electronic devices can receive electrical power from a power source of a portable container that has been loaded into a compartment of the fuselage.

According to a third aspect of the present disclosure there is provided a method of powering one or more electronic devices of an aircraft using the portable container according to any one of the configurations disclosed herein, the method comprising:
charging the one or more rechargeable batteries of the portable container using power from a mains power supply;
loading the portable container into a compartment of a fuselage of the aircraft;
connecting the electrical connector of the portable container with another electrical connector that is electrically coupled to one or more of the electronic devices of the aircraft;
discharging one or more of the rechargeable batteries and transmitting a discharge current from the portable container to one or more of the electronic devices via the electrical connectors; and
performing, by one or more of the electronic devices, one or more operations using the discharge current received from the portable container.

Thus examples of the present disclosure provide a method in which one or more rechargeable batteries of a portable container are firstly charged using a mains power supply (which may optionally be electrical power generated from renewable energy resources), and the portable container comprising one or more of the charged rechargeable batteries is subsequently loaded into a compartment of the fuselage and then electrically coupled to one or more electronic devices of the airplane via the electrical connector of the portable container and the portable container then transmits electrical power to one or more of the electronic devices.

### Brief Description of the Drawings

Examples of the apparatuses and methods according to this disclosure will be described by way of example only and with reference to the drawings. It should be noted that variations are possible within the scope of the attached claims
Figure 1 schematically illustrates an example of a portable container having walls arranged to define a housing;
Figure 2 schematically illustrates an example of an air cargo container as an example of the portable container;
Figure 3 schematically illustrates an example of a power source and electrical connector of the portable container;
Figure 4 schematically illustrates an example of a portable container having an electrical connector physically connected to a corresponding electrical connector for allowing transfer of electrical power via the electrical connectors;
Figure 5 schematically illustrates an example of a portable container comprising two electrical connectors;
Figure 6 schematically illustrates an example of a portable container having an electrical connector arranged on a recessed portion of an external surface;
Figure 7 schematically illustrates an example of an air cargo container comprising a second compartment for housing a power source;
Figures 8a and 8b schematically illustrate examples of portable containers connected to an aircraft electrical system; and
Figure 9 is a schematic flowchart illustrating a method of powering one or more electronic devices of an aircraft using a portable container.

### Detailed Description

In the following description, a number of specific details are presented in order to provide a thorough understanding of the aspects of the present disclosure. It will be apparent, however, to a person skilled in the art that these specific details need not be employed to practice the techniques of the present disclosure. Conversely, specific details known to the person skilled in the art are omitted for the purposes of clarity where appropriate.

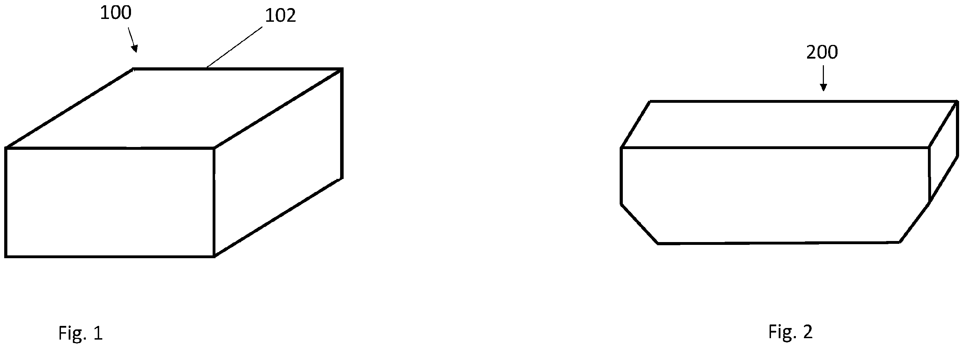

Figure 1 schematically illustrates an example of a portable container 100 suitable for (capable of) being loaded into a compartment of an aircraft and unloaded from the compartment of the aircraft. In the example shown in Figure 1, the portable container 100 is shown with a housing 102 having a substantially cuboidal exterior shape defined by the walls, however, other suitable shapes are possible. In some cases, the portable container 100 may have a different exterior shape to that shown in Figure 1 and generally the shape of the portable container 100 is not particularly limited. In particular, the portable container 100 may in some examples have at least one wall that is curved or otherwise suitably shaped according to a shape of a fuselage of an aircraft for allow efficient use of space. Alternatively or in addition, the portable container 100 may have a smaller or greater number of walls than shown in the example of Figure 1.

In some examples, the portable container 100 may be a dedicated container (in other words a single purpose container) designed for being loaded to and from aircraft and providing a power source based on the discharging of the one or more rechargeable batteries. However, in other examples the portable container 100 may be a dual-purpose (or indeed even a multi-purpose) apparatus providing power source functionality as well as other functionalities. In particular, in addition to the power source functionality, the portable container may optionally also provide one or more of: cargo storage functionality (e.g. baggage storage functionality) and refrigeration functionality.

Figure 2 schematically illustrates an example of another portable container 200, in which in this example the portable container 200 is a cargo container (also referred to as an air cargo container) for storing cargo and for loading into a compartment of an aircraft. Hence, some examples of the disclosure provide a cargo container for being loaded into and unloaded from a compartment of an aircraft, the cargo container comprising: a power source comprising one or more rechargeable batteries and coupling circuitry configured to electrically couple one or more of the rechargeable batteries to an electrical connector; and a housing comprising the power source, wherein the power source is operable to discharge one or more of the rechargeable batteries and transmit a discharge current via the electrical connector, and wherein the electrical connector comprises an interface portion operable to be physically connectable with a corresponding interface portion of another electrical connector to electrically couple the electrical connector to the another electrical connector.

In the example of Figure 2, some of the walls are inclined at an angle for allowing efficient use of space when loaded into a compartment (e.g. a cargo compartment) of a fuselage. Whilst Figure 2 shows an example of an air cargo container having inclined walls, the techniques of the present disclosure also consider air cargo containers having an exterior shape without such inclined walls and/or with or without one or more curved walls. The following website provides examples of possible dimensions and shapes for air cargo containers for loading into a cargo compartment of an aircraft (https://www.thefreighthero.com/airfreight/air-freight-containers) and the techniques of the present disclosure may employ cargo containers having any of the dimensions disclosed therein.

In the following discussion, any of the techniques disclosed in relation to the portable container can be applied in the case where the portable container is an air cargo container. Hence, whilst the following discussion generally refers to portable containers, it is to be understood that an air cargo container (e.g. like that shown in Figure 2 for example) may specifically be used.

More generally, the present disclosure provides a portable container comprising a housing (e.g. defined by walls) and the housing stores a power source. The portable container is of any suitable dimensions for allowing the portable container to be loaded into a compartment of a fuselage of an aircraft. For example, the portable container may be loaded into a compartment of the fuselage by airport staff, optionally using one or more loading devices, during flight preparation. In some examples, the portable container may be loaded into any of a cargo compartment, baggage compartment and cabin compartment. Moreover, the portable container(s) may be loaded into a compartment that is accessible to flight staff during flight and/or may be loaded into a compartment that is not accessible to flight staff during flight. For example, a cargo compartment for a passenger aircraft, typically located below the cabin floor and thus not accessible during flight, and the portable container is suitably sized to permit loading and unloading of the portable container via a cargo compartment door or other similar compartment door.

The portable container is capable of being loaded into a compartment of an aircraft and subsequently unloaded from the compartment. Therefore, the portable container can be loaded onto an aircraft and used to provide electrical power and can then subsequently be removed from the aircraft after completion of one or more flights. Moreover, the portable container can be releasably secured within the compartment of the fuselage using one or more securing devices (e.g. one or more securing straps and/or nets may be used to releasably secure the portable container) in the compartment. Optionally, the portable container may comprise one or more structures on an external surface for facilitating attachment of the portable container to a portion of the compartment. For example, the portable container may comprise one or more hooks and/or other similar structures for this purpose. Consequently, the portable container is capable of being loaded into a compartment during pre-flight preparation, removably secured within the compartment, and then unloaded from the compartment during post-flight unloading operations.

Hence more generally, the portable container of the present disclosure is capable of easily being loaded to and unloaded from an aircraft by being both portable and releasably securable to a portion of a compartment, such that a decision as to whether to load the portable container and/or a number of the portable containers to load can potentially be made for individual flights. Moreover, as opposed to providing a power source (e.g. battery pack) that is integrally formed with a frame of the aircraft and thus not removable (or at least not capable of being removed between successive flights by airport staff), the techniques of the present disclosure provide a portable container which can be employed when appropriate and/or in an appropriate number for a specific flight to allow optimisation for the properties (e.g. travel distance, size of aircraft, number of passengers and/or gross weight for the flight) of that specific flight. In particular, factors such as a total flight distance for a flight may be used to decide upon how many portable containers to use. Furthermore, as well as allowing user selection of a number of the portable containers to be used for a given flight, the portable containers may optionally be distributed within one or more compartments of the fuselage to assist with weight balancing of the aircraft for that given flight. For example, a plurality of respective portable containers may be selectively arranged within a compartment, and each portable container may have a substantially same or different weight.

For cases in which a short turnover period is available between successive flights (which may potentially be too short for a full recharge of the one or more rechargeable batteries of the portable container(s) already loaded onto the aircraft), the techniques of the present disclosure provide for easy and quick unloading of the portable container(s) from the aircraft and replacement with one or more portable containers including rechargeable batteries which have previously been charged.

Hence more generally, the techniques of the present disclosure provide a portable container that can be employed as a removable power source for an aircraft. The portable container can potentially be used with existing aircraft without requiring a redesign of the aircraft other than to provide one or more electrical connectors in a compartment for receiving electrical power and providing the electrical power to one or more on-board electronics devices. Moreover, existing compartments (e.g. existing cargo compartments and baggage compartments) of an aircraft can be used for storing the portable container during flight.

The walls of the portable container may be made of any suitable material and in some examples the walls comprise at least one of metal and plastic. The walls may have any suitable thickness. Optionally, the walls may be made of a lightweight and fire-resistant material to provide enhanced fire safety. For example, lightweight ceramic and/or polymeric materials may be used for this purpose. Hence more generally, the walls may comprise one or more ceramic materials and/or one or more polymeric materials.

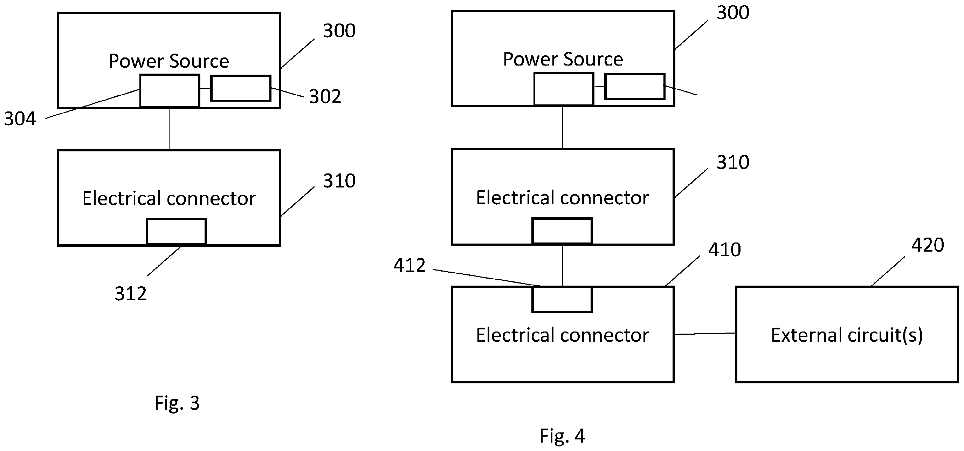

Figure 3 schematically illustrates an example of a power source 300 and an electrical connector 310 provided as part of a respective portable container, such as the respective portable container 100 or 200 discussed above. The power source 300 comprises one or more rechargeable batteries 302 and coupling circuitry to electrically couple the one or more rechargeable batteries 302 to the electrical connector 310. Any suitable rechargeable battery technology may be used for the one or more rechargeable batteries 302 and possible types of rechargeable battery are discussed in more detail later. Any suitable form may be used for the electrical connector 310. The electrical connector 310 may be either a male or female type connector for interfacing with a corresponding female or male type connector, respectively. More generally, the electrical connector 310 is electrically coupled to the one or more rechargeable batteries and provides a connection point for connecting the portable container to an external circuit for the purpose of transferring electrical power to and from the portable container. Any suitable type of connector may be used and the portable container may comprise a plug connector for connecting to a corresponding receptacle connector or vice versa.

The power source 300 comprises one or more rechargeable batteries for storing energy so that the when the portable container, which houses the power source 300, is loaded onto an aircraft the energy stored by the one or more rechargeable batteries can be converted to electrical power and output via the electrical connector 310 to thereby deliver the electrical power to an electrical system of the aircraft for powering one or more electronic devices on the aircraft.

As explained above, the power source 300 comprises one or more rechargeable batteries. In some examples, the power source 300 may comprise a plurality of rechargeable batteries. In the following discussion the terms battery and batteries are used interchangeably and it is to be understood that the power source 300 comprises at least one rechargeable battery.

The power source 300 comprises the coupling circuitry to electrically couple the one or more rechargeable batteries to the electrical connector 310 so that electrical energy can be transmitted by the electrical connector 310. Generally, the coupling circuitry comprises one or more conductors (such as one or more so-called power buses). The power source 300 generally has two modes of operation; a first mode (also referred to as a battery-discharge mode) for enabling discharging of the one or more batteries to thereby provide electrical power to an external circuit and a second mode (also referred to as a battery-charge mode) for enabling charging of the one or more batteries. In some examples, one or more of the rechargeable batteries may be releasably secured to the portable container (e.g. cargo container), and thus removable, for allowing one or more of the rechargeable batteries to be removed from the portable container for recharging and later reinstalled in the portable container for subsequent use for providing electrical power when on-board an aircraft. This is discussed in more detail later.

Figure 4 schematically illustrates an example in which the electrical connector 310 of the portable container is physically connected to a corresponding electrical connector 410, and the electrical connector 410 is electrically coupled to an external circuit 420. The electrical connector 410 may for example be an electrical connector (such as a plug or socket) of an aircraft such that a user manually connects the two connectors 310 and 410 to connect the portable container (e.g. cargo container) to an electrical system of the aircraft to allow the power source 300 to be used for powering one or more of the aircraft's electronic components. Hence in some cases, the external circuit 420 may be a circuit that is part of an aircraft's electrical system. Alternatively, in other cases the electrical connector 410 may for example be an electrical connector (such as a plug or socket) for a mains power supply, or a HV supply for faster charging, such that the two connectors 310 and 410 can be connected to allow electrical power to be transferred to the power source 300 (specifically, to allow electrical power to be transferred to the power source 300 for charging the one or more rechargeable batteries).

Hence more generally, the electrical connector 310 comprises an interface portion 312 operable to physically connect with a corresponding interface portion 412 of the another electrical connector 410 to electrically couple the electrical connector to the another electrical connector for enabling transfer of electrical power from the portable container to an external circuit and transfer of electrical power to the portable container from an external circuit.

Hence, the power source 300 is operable to perform discharging of one or more of the rechargeable batteries and transmit a discharge current via the electrical connector 310. Consequently, the power source 300 is operable to transmit electrical power via the electrical connector 310 using energy stored by at least some of the rechargeable batteries.

In some examples of the disclosure, the power source 300 is operable to receive a current via the electrical connector 310 and one or more of the rechargeable batteries are operable to store energy according to the received current. Consequently, electrical power can be received via the electrical connector 310, possibly from a mains power supply, so as to recharge one or more of the rechargeable batteries. The portable container of the present disclosure is operable to act as a power source before, during and/or after flight to provide power for an electrical system of the aircraft to power one or more electronic devices, and the portable container may either be unloaded from the aircraft for recharging prior to use on a next flight or recharged in situ on the aircraft (i.e. without being removed from the aircraft) so as to be utilised as a power source again on the aircraft's next flight.

The power source 300 can be operable to receive electrical power via the electrical connector 310 for charging the one or more rechargeable batteries. However, mains electricity employs an alternating current (AC) electric power supply, whereas a direct current (DC) signal is generally used for battery charging. Hence, in some examples of the disclosure the coupling circuitry optionally comprises one or more rectifiers operable to receive an alternating current signal and output a direct current signal for charging the one or more chargeable batteries. In this way, the portable container (or more specifically the electrical connector 310 of the portable container) can be connected to an electrical connector 410 associated with a mains power supply and the rectifier allows the received AC signal to be transformed to a DC signal for charging the one or more rechargeable batteries. Optionally, in some examples the electrical connector 310 may receive a DC signal by connecting the electrical connector to a DC power supply.

Hence more generally, in the example shown in Figure 4 the external circuit 420 may for example be a circuit associated with an electrical system of an aircraft so that electrical power is transmitted from the power source 300 for use by the electrical system of the aircraft, or the external circuit 420 may be a circuit associated with a mains power supply so that electrical power is received by the power source 300 from the external circuit for recharging the one or more batteries.

Whilst Figures 3 and 4 illustrate examples in which a portable container comprises a power source 300 and an electrical connector 310 for connecting one or more external circuits 420 to the power source 300, the techniques of the present disclosure are not limited to this and a respective portable container may comprise a plurality of power sources each having an associated electrical connector for allowing transfer of electrical power from and to the power source.

Similarly, whilst Figures 3 and 4 illustrate examples in which the power source 300 is electrically coupled to a respective electrical connector 310, the techniques of the present disclosure are not limited to this and a respective portable container may comprise at least one power source 300 that is electrically coupled to a plurality of electrical connectors.

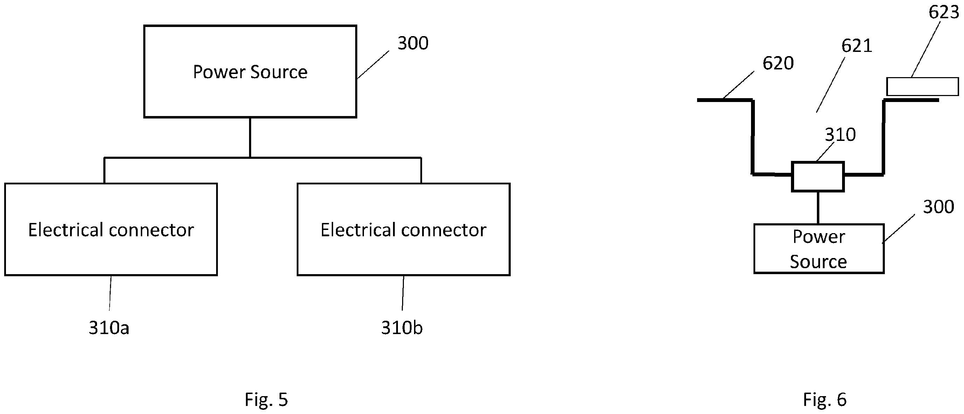

Referring now to Figure 5, an example is shown in which a portable container (e.g. container 100 or 200) comprises the power source 300 and a first electrical connector 310a and a second electrical connector 310b, in which the first and second electrical connectors 310a, 310b are each electrically coupled to the power source 300 via the coupling circuitry. Hence, the two electrical connectors 310a, 310b both represent connection possibilities for connecting to the power source 300 and thus allow ease of access in that one or both of the connectors can be used to access the power source 300. Whilst Figure 5 illustrates an example of a portable container comprising two electrical connectors, the number of electrical connectors may be greater in other examples.

Hence more generally, in some examples of the disclosure a portable container comprises a plurality of electrical connectors (e.g. connectors 310a and 310b) each being electrically coupled to one or more of the rechargeable batteries. Consequently, the portable container may comprise a plurality of electrical connectors representing a plurality of possible locations for connecting to the power source of the container. This may be particularly beneficial in that the portable container can be loaded into a compartment of an aircraft, and the portable container comprises a plurality of electrical connectors such that even if one electrical connector is obstructed (e.g. due to an adjacent container and/or a wall of the compartment) at least one additional electrical connector provides another possibility for connecting to the power source. Moreover, in this way the portable container may be easily loaded into a compartment and a most convenient electrical connector of the plurality of electrical connectors can be utilised.

In some examples of the disclosure, at least one electrical connector is arranged on an external surface of the portable container. An electrical connector (e.g. connector 310 in Figure 3) can be located on an external surface of one of the walls of the portable container to thereby permit quick and easy access to the external surface. This may be particularly beneficial in that the portable container can be loaded into a compartment and the electrical connector can be quickly and easily accessed by a user (e.g. airport staff) to engage another electrical connector with container's electrical connector to thereby electrically couple the portable container with an electrical system of the airplane.

In some examples of the disclosure, at least one electrical connector is arranged on an external surface of the portable container and the electrical connector is arranged on a recessed portion of the external surface of the portable container. One or more of the walls may have an external surface comprising a recessed portion. An electrical connector can thus be arranged on the recessed portion of the wall such that the electrical connector is externally accessible whilst also having some degree of protection from damage that may occur when manoeuvring the portable container. Figure 6 is a schematic diagram illustrating an example of a portable container comprising a wall having an exterior surface 620 with a recessed portion 621, in which an electrical connector 310 is arranged on the recessed portion of the external surface. Using an arrangement such as that shown in Figure 6, a likelihood of the electrical connector 310 being damaged (e.g. during loading and/or unloading of the portable container and/or during transit at an airport) can be reduced.

In some examples of the disclosure, a portable container comprises a movable protective cover movable between a first position and a second position, wherein in the first position the movable protective cover is configured to cover the electrical connector and in the second position the electrical connector is not covered by the movable protective cover. The electrical connector can thus be arranged on an external surface of the portable container and a movable protective cover arranged so as to provide protection for the electrical connector when not being used (when not physically connected to another electrical connector) and the movable protective cover can be moved to the second position to expose the electrical connector when desired. For example, the movable protective cover may be pivotable or slidable so as to allow movement by pivoting or sliding, respectively, the protective cover. Referring again to Figure 6, for example, the movable protective cover 623 may be arranged so as to extend over and cover the recessed portion 621 and may be slidable in a direction parallel to the exterior surface 620 so that the movable protective cover can provide protection for the connector 310 whilst also permitting easy access to the connector 310. For example, the protective cover may be biased into the first position using one or more resilient biasing means (e.g. one or more springs) and a user can apply a force to slide the protective cover from the first position towards the second position.

In some examples of the disclosure, a first electrical connector (e.g. 310a) is arranged on a first wall of the housing and a second electrical connector (e.g. 310b) is arranged on a second wall of the housing. As discussed above, the portable container may comprise walls defining the housing. Figure 1 provides an example of a portable container having a substantially cuboidal exterior shape and what can be considered as six respective walls made up of four side walls, a base-plate and a top-plate. In some examples , at least one electrical connector may be arranged on an external surface of a first wall and another electrical connector may be arranged on an external surface of a second wall. For example, a first electrical connector may be arranged on an external surface of a first side wall and a second electrical connector may be arranged on an external surface of a second side wall. Moreover, in some examples, electrical connectors may be arranged on opposite side walls facing in opposite directions. Therefore, in the case where a first side wall of the portable container is in contact with or proximate to an exterior wall (e.g. wall of a fuselage compartment) such that a first electrical connector on the first side wall is obstructed (or at least inconvenient), a second electrical connector on a second side wall of the portable container opposite the first side wall of the container provides another possibility for connecting to the power source of the portable container.

In some examples of the disclosure, the one or more rechargeable batteries are integrally formed with the portable container. Hence in some cases the portable container is provided with an integrally formed power source such that the one or more rechargeable batteries are permanently fixed to the portable container. Such an arrangement may be advantageous for ease of manufacturing.

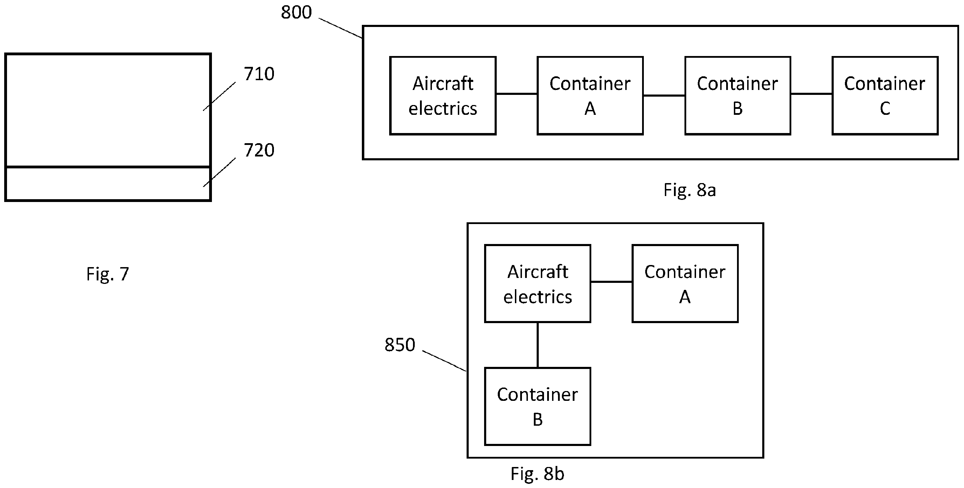

Figure 7 is a schematic diagram illustrating a side-on view of an example in which the portable container is an air cargo container. In this example, the air cargo container has a housing comprising a first compartment 710 for storing cargo and a second compartment 720 for storing the power source (e.g. power source 300). In the example shown in Figure 7, the power source may be integrally formed with the portable container such that the power source is permanently sealed in the second compartment 720 and one or more electrical connectors are available for electrically connecting to the power source. Alternatively, in other examples one or more rechargeable batteries of the power source may be releasably attached to an interior portion of the second compartment 720 and a hatch or door or other similar entrance may be provided for accessing the interior portion of the second compartment 720 so that one or more of the rechargeable batteries can be removed from the portable container. Optionally, the first compartment 710 for storing the cargo may have a volume that is greater than a volume of the second compartment 720 for storing the power source, as shown in Figure 7. However, in some examples the volume of the first compartment 710 and the second compartment may be substantially equal, or the volume of the second compartment 720 may be greater than the volume of the first compartment 710. Hence more generally, a ratio of a volume of a cargo compartment and a volume of a power source compartment can be freely decided for a respective portable container. For example, a ratio of the volume (VOL_{power}) of the power source compartment 720 and the volume (VOL_{cargo}) of the cargo compartment 710 may be a 1 : N ratio, where N has a value in the range 0.1 to 40. Therefore, a ratio of VOL_{power}: VOL_{cargo} may be 1 : 0.1 or 1 : 40 or any ratio in this range. In particular, the ratio may be a 1:1 ratio in some cases.

In the example shown in figure 7, the second compartment 720 that houses the power source is located below the first compartment 710. The example configuration shown in Figure 7 can be particularly beneficial in that the one or more rechargeable batteries can be positioned in proximity to the base of the portable container thereby resulting in improved stability due to the position of the centre of gravity for the portable container. Hence more generally, in some examples the housing comprises a first compartment 710 for storing cargo and a second compartment 720 for storing one or more of the rechargeable batteries, wherein the second compartment 720 is located below the first compartment 710 when the portable container is vertically oriented.

In some examples of the disclosure, the one or more rechargeable batteries are releasably attached to an internal portion of the housing. The portable container (e.g. portable container 100 or 200) may have a housing comprising a compartment for storing one or more power sources each comprising one or more rechargeable batteries, in which one or more of the rechargeable batteries are releasably attached to an interior portion of the compartment. In this case, a hatch, door or other similar entrance is thus provided for allowing a user to access the interior portion of the compartment for removal and addition of one or more rechargeable batteries. Hence, rechargeable batteries can potentially be swapped in and out as needed. For example, degradation of battery performance over time may lead to unsatisfactory performance and one or more poorly functioning rechargeable batteries can be removed and replaced without having to replace the entire portable container. Alternatively or in addition, one or more rechargeable batteries having a low charge state (e.g. due to prior use) can be substituted with one or more fully (or substantially fully) charged rechargeable batteries. This may for example be beneficial for re-using a same portable container on successive flights when a short turnover time between flights does not allow for a complete recharge.

As explained above, the present disclosure provides a portable container comprising one or more power sources (e.g. power source 300). Each power source comprises one or more rechargeable batteries, in which each rechargeable battery comprises a plurality of battery cells. In some examples, the power source comprises at least one battery pack comprising a plurality of respective rechargeable batteries. Any suitable rechargeable battery technology may be used. In some examples, the one or more rechargeable batteries may comprise one or more from the list consisting of: nickel-cadmium (Ni-Cd); nickel-metal hydride (NiMH); lithium-ion (Li-ion) and lithium-air (Li-air). The type of rechargeable battery is not particularly limited and any suitable rechargeable battery technology may be used.

Any suitable battery capacity may be provided and this may vary depending on the number and/or complexity of the electrical devices that are to be powered. Moreover, in some examples, a single or relatively small number of portable containers may be loaded onto an aircraft or a relatively large number of portable containers may instead be loaded onto the aircraft, and as such a target battery capacity for a given flight may be achieved using fewer containers each having a higher battery capacity or a greater number of containers each having a lower battery capacity. In some examples, a power source comprises a plurality of rechargeable batteries having a battery capacity in the range 100 watt-hours to 100 kilo watt-hours.

In some examples, the portable container may comprise a plurality of rechargeable batteries, the plurality of rechargeable batteries comprising: one or more first rechargeable batteries comprising a first type of battery cell; and one or more second rechargeable batteries comprising a second type of battery cell different from the first type of battery cell.

In some examples, the portable container may comprise a plurality of electrical connectors, comprising a first electrical connector (e.g. 310a) and a second electrical connector (e.g. 310b) in which the first electrical connector and the second electrical connector are configured to supply power with different maximum power ratings. In particular, one of the first and second electrical connectors may be capable of providing power at up to X Watts and the other of the first and second electrical connectors may be capable of providing power at up to Y watts, where values of X and Y are different.

For example, a number of rechargeable batteries coupled to the first electrical connector may be different to a number of rechargeable batteries coupled to the second electrical connector for achieving the different maximum power ratings. Alternatively or in addition, the rechargeable batteries coupled to the first electrical connector may comprise a first type of battery cell and the rechargeable batteries coupled to the second electrical connector may comprise a second type of battery cell for achieving the different maximum power ratings. For example, one or more first rechargeable batteries comprising a first type of battery cell suited to providing a smaller discharge current for a longer period of time may be connected to the first electrical connector and one or more second rechargeable batteries comprising a second type of battery cell suited to providing a larger discharge current for a shorter period of time may be connected to the second electrical connector. In this way, the first electrical connector may be used for powering on-board electronic devices such as lighting devices, whereas the second electrical connector may be used for powering other on-board electronic devices requiring more power for a shorter period of time, such as a compressor or an actuator, or in some cases the APU when starting up the aircraft.

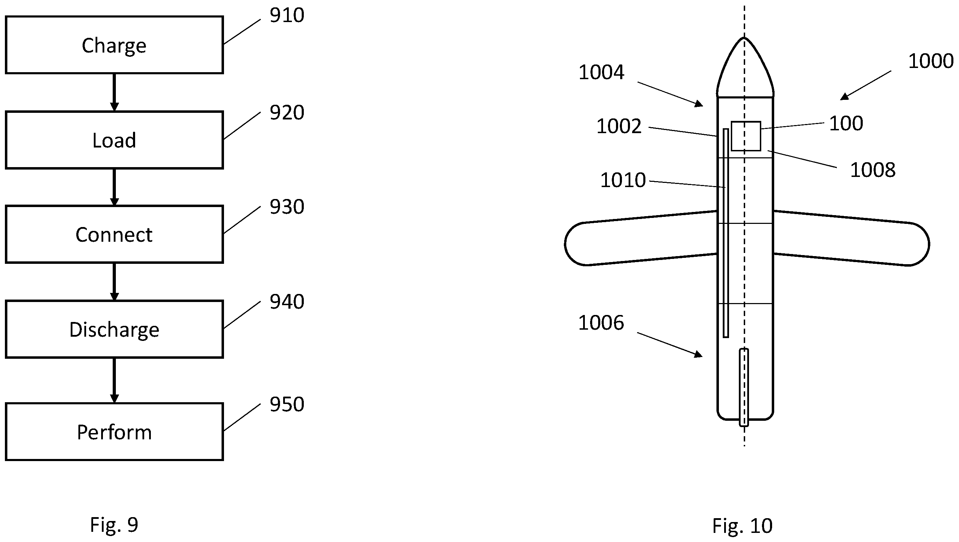

Figure 10 shows another aspect of the present disclosure, in which an aircraft 1000 comprises one or more portable containers 100 according to any of the configurations discussed above. In particular, the aircraft 1000 comprises a fuselage 1002 defining a longitudinal axis L between a forward end 1004 and an aft end 1006, the fuselage 1002 comprising one or more compartments 1008; and an electrical system 1010 comprising one or more electronic devices and coupling circuitry to electrically couple one or more of the electronic devices to an electrical connector, wherein at least one compartment of the fuselage comprises at least one portable container 100 according to any one of the configurations disclosed previously herein (e.g. the above mentioned air cargo container), wherein the electrical connector of the portable container is physically connected to the electrical connector of the electrical system, and wherein the portable container is configured to discharge one or more of the rechargeable batteries and transmit a discharge current to the electrical system of the aircraft via the physically connected electrical connectors.

The type of aircraft considered by the present disclosure is not particularly limited and the general design aspects thereof is known to the person skilled in the art and not discussed herein. For example, the aircraft considered may be a passenger aircraft such as the Boeing^{®} 737, Boeing ^{®} 787, or Airbus^{®} A320. In other examples, the aircraft considered may be a light passenger aircraft or a cargo aircraft (also known as a freight aircraft) such as the Boeing^{®} 747-400.

The fuselage comprises at least one compartment into which the portable container is capable of being loaded via a door, hatch or other similar entrance. Generally, the one or more portable containers can be loaded into one or more temperature controlled compartments for optimal battery performance, such as a cargo compartment, baggage compartment and/or cabin compartment.

The aircraft comprises at least one electrical system comprising one or more electronic devices electrically coupled to one or more electrical connectors located in the compartment such that one or more of the electrical connectors in the compartment can be physically connected to one or more portable containers located in the compartment (e.g. as shown in Figure 4 in which the electrical connector 310 of the portable container is physically connected to the electrical connector 410) to thereby receive electrical power from one or more portable containers for powering one or more of the electronic devices. Hence, the power source housed in a portable container (e.g. portable container 100 or 200) is operable to discharge one or more of the rechargeable batteries to output a discharge current and transmit the discharge current to the electrical system of the aircraft. In this way, one or more of the electronic devices connected to the electrical system can be powered via electrical power from one or more of the portable containers.

It should be noted that in the above discussion, the aircraft may comprise one or more electrical systems, in which at least one of the electrical systems receives electrical power from one or more portable containers. For example, the aircraft may comprise a first electrical system which receives electrical power from one or more portable containers (when loaded onto the aircraft and connected to the first electrical system) and a second electrical system which receives electrical power from one or more of an engine driven generator and an APU. In this case, a first set of electronic devices connected to the first electrical system can be powered using electrical power from the one or more portable containers and a second set of electronic devices connected to the second electrical system can be powered using electrical power from the engine driven generator and/or the APU. Put differently, electrical power from the one or more portable containers may be responsible for powering the first electrical system, whereas electrical power from another source (e.g. one or more engine driven generators) may be responsible for powering the second electrical system. Hence more generally, in examples of the disclosure at least some of the electronic devices of the aircraft are operable to receive electrical power from one or more portable containers loaded into at least one compartment of the fuselage.

Optionally, in other examples the aircraft may comprise a single electrical system that receives electrical power solely from the one or more portable containers. Consequently, in some cases electrical power from the one or more portable containers may be responsible for powering all (or substantially all) of the electronic devices of the aircraft.

In some examples, the electrical system (e.g. the first electrical system referred to above) connected to the one or more portable containers may be an electrical system for the on-board electric air-conditioning system. Hence, for example the electrical system may be powered using one or more portable containers (e.g. portable containers 100, 200) so that electrical power from the one or more portable containers is used solely for powering the on-board electric air-conditioning system (e.g. by powering the associated electric compressors and actuators of the air-conditioning system). Therefore, in some cases the electrical power from a portable container is used to power one or more compressors and/or one or more actuators of an air conditioning system of the aircraft.

Alternatively or in addition, one or more electronic devices in the cockpit may be connected to the electrical system (e.g. the first electrical system referred to above). Therefore, one or more electronic cockpit instruments may be powered using the one or more portable containers as a power source.

Alternatively or in addition, one or more entertainment devices may be connected to the electrical system (e.g. the first electrical system referred to above). For example, one or more display devices and/or audio devices used for in-flight entertainment may be powered by one or more portable containers.

Alternatively or in addition, one or more power vital systems may be connected to the electrical system (e.g. the first electrical system referred to above), including one or more of: flight controls; flight-critical instrumentation, navigation devices and communication devices. Specifically, an engine driven generator may be used to power the one or more power vital systems and, in the event of failure of the engine driven generator, the one or more portable containers may be used as an emergency power source. Therefore, in some examples one or more power vital systems may initially receive electrical power from an engine driven generator and subsequently receive electrical power from one or more of the portable containers. For example, the above mentioned coupling circuitry for coupling one or more of the aircraft's electronic devices to the electrical connector in the compartment may comprise one or more switches so as to allow one or more electronic devices to be selectively powered by either the engine driven generator or the one or more portable containers.

Consequently, whereas many existing aircraft include a RAT for emergency use in the case of failure of both the engine driven generator and the APU, the techniques of the present disclosure can potentially be implemented to provide an aircraft without a RAT thereby removing the weight associated therewith.

In some examples of the disclosure, in the above mentioned aircraft at least one compartment of the fuselage may comprise a plurality of portable containers each including one or more power sources. The at least one compartment may comprise a first portable container for which an electrical connector of the first portable container is physically connected to an electrical connector in the compartment and an electrical connector of the second portable container is physically connected to another electrical connector in the compartment.

However, in some situations, it is desirable to facilitate connection of two or more portable containers to the electrical system of the aircraft. Hence, in some examples of the disclosure the at least one compartment of the fuselage of the aircraft comprises at least a first portable container according to any one of the configurations discussed above and a second portable container according to any one of the configurations discussed above, wherein the first portable container is directly connected to the electrical connector of the electrical system of the aircraft, and wherein the second portable container is directly connected to the first portable container and configured to transmit a discharge current to the electrical system via the first portable container. Consequently, the first and second portable containers can be connected to the electrical system via a same electrical connector in the compartment thus reducing the number of electrical connectors needed in the compartment of the aircraft. Specifically, the first portable container receives electrical power from the second portable container (using a connection therebetween) and transmits the electrical power to the aircraft electrical system as.

Figure 8a schematically illustrates an example of an aircraft 800 comprising three portable containers (A, B and C) transmitting power to the aircraft electrics using connecting wires extending between containers, in which the portable container B transmits electrical power to the aircraft electrical system by being connected to the portable container A, and the portable container C transmits electrical power to the aircraft electrical system by being connected to the portable container B. Figure 8b schematically illustrates an example of an aircraft 850 including two portable containers (the portable container A and the portable container B) in which each portable container is connected to a respective electrical connector of the aircraft electrical system.

Referring now to Figure 9, in some examples of the disclosure there is provided a method of powering one or more electronic devices of an aircraft using the portable container. The method comprises:
charging (at a step 910) the one or more rechargeable batteries of the portable container using power from a mains power supply;
loading (at a step 920) the portable container into a compartment of a fuselage of the aircraft;
connecting (at a step 930) the electrical connector of the portable container with another electrical connector that is electrically coupled to one or more of the electronic devices of the aircraft;
discharging (at a step 940) one or more of the rechargeable batteries and transmitting a discharge current from the portable container to one or more of the electronic devices via the electrical connectors; and
performing (at a step 950), by one or more of the electronic devices, one or more operations using the discharge current received from the portable container.

It will also be apparent that numerous modifications and variations of the present disclosure are possible in light of the above teachings. It is therefore to be understood that within the scope of the appended claims, the disclosure may be practiced otherwise than as specifically described herein.

## Claims

1. A portable container for being loaded into and unloaded from a compartment of an aircraft, the portable container comprising:
a power source comprising one or more rechargeable batteries and coupling circuitry configured to electrically couple one or more of the rechargeable batteries to an electrical connector; and
a housing comprising the power source,
wherein the power source is operable to discharge one or more of the rechargeable batteries and transmit a discharge current via the electrical connector, and wherein the electrical connector comprises an interface portion operable to be physically connectable with a corresponding interface portion of another electrical connector to electrically couple the electrical connector to the another electrical connector.

2. The portable container according to claim 1, wherein the portable container is a cargo container for storing cargo, and wherein the housing comprises a first compartment for storing the cargo and a second compartment for storing one or more of the rechargeable batteries.

3. The portable container according to claim 1 or claim 2, wherein the power source is operable to receive a current via the electrical connector and one or more of the rechargeable batteries are operable to store energy according to the received current.

4. The portable container according to any preceding claim, comprising a plurality of electrical connectors each being electrically coupled to one or more of the rechargeable batteries via the coupling circuitry.

5. The portable container according to any preceding claim, wherein at least one electrical connector is arranged on an external surface of the portable container.

6. The portable container according to claim 5, wherein the electrical connector is arranged on a recessed portion of the external surface of the portable container.

7. The portable container according to claim 5 or claim 6, comprising a movable protective cover movable between a first position and a second position, wherein in the first position the movable protective cover is configured to cover the electrical connector and in the second position the electrical connector is not covered by the movable protective cover.

8. The portable container according to any one of claims 4 to 7, wherein a first electrical connector is arranged on a first wall defining the housing and a second electrical connector is arranged on a second wall defining the housing.

9. The portable container according to any preceding claim, wherein the housing has a substantially cuboidal exterior shape.

10. The portable container according to any preceding claim, wherein one or more of the rechargeable batteries are integrally formed with the portable container.

11. The portable container according to any preceding claim, wherein one or more of the rechargeable batteries are releasably attached to an internal portion of the housing.

12. An aircraft comprising:
a fuselage defining a longitudinal axis between a forward end and an aft end, the fuselage comprising one or more compartments; and
an electrical system comprising one or more electronic devices and coupling circuitry to electrically couple one or more of the electronic devices to an electrical connector,
wherein at least one compartment of the fuselage comprises at least one portable container according to any one of claims 1 to 11, wherein the electrical connector of the portable container is physically connected to the electrical connector of the electrical system, and wherein the portable container is configured to discharge one or more of the rechargeable batteries and transmit a discharge current to the electrical system of the aircraft via the physically connected electrical connectors.

13. The aircraft according to claim 12, wherein the one or more electronic devices comprise one or more from the list consisting of:
one or more compressors and/or one or more actuators of an air conditioning system;
one or more cockpit instruments;
one or more entertainment devices; and
one or more power vital systems including one or more of: flight controls; flight-critical instrumentation, navigation devices and communication devices.

14. The aircraft according to claim 12 or claim 13, wherein the compartment comprises at least a first portable container according to any one of claims 1 to 11 and a second portable container according to any one of claims 1 to 11, wherein the first portable container is directly connected to the electrical connector of the electrical system, and wherein the second portable container is directly connected to the first portable container and configured to transmit a discharge current to the electrical system via the first portable container.

15. A method of powering one or more electronic devices of an aircraft using the portable container according to any one of claims 1 to 11, the method comprising:
charging the one or more rechargeable batteries of the portable container using power from a mains power supply;
loading the portable container into a compartment of a fuselage of the aircraft;
connecting the electrical connector of the portable container with another electrical connector that is electrically coupled to one or more of the electronic devices of the aircraft;
discharging one or more of the rechargeable batteries and transmitting a discharge current from the portable container to one or more of the electronic devices via the electrical connectors; and
performing, by one or more of the electronic devices, one or more operations using the discharge current received from the portable container.
